# EUROPEAN PATENT SPECIFICATION

(11) **EP 4 209 746 B1**
(45) Date of publication and mention of the grant of the patent: **11.06.2025**
(21) Application number: 21863381.6
(22) Date of filing: 13.07.2021
(51) Int. Cl.: F27D 7/02, C21C 5/48, C21C 5/52, C21C 7/072, F27D 3/16, C21C 5/44, F27D 19/00, C21C 5/34

(54) **ANNULAR-GAP-TYPE GAS SUPPLY ELEMENT, AND GAS SUPPLY METHOD**
GASVERSORGUNGSELEMENT VOM RINGSPALTTYP UND GASVERSORGUNGSVERFAHREN
ÉLÉMENT D'ALIMENTATION EN GAZ DE TYPE À ESPACE ANNULAIRE ET PROCÉDÉ D'ALIMENTATION EN GAZ

(30) Priority: 03.09.2020 CN 202010916539
(43) Date of publication of application: 12.07.2023
(73) Proprietor: Central Iron & Steel Research Institute, Beijing 100081 (CN)
(72) Inventor: YANG, Libin, Beijing 100081 (CN); WANG, Jie, Beijing 100081 (CN); YANG, Yong, Beijing 100081 (CN); ZHAO, Jinxuan, Beijing 100081 (CN); WANG, Chengyi, Beijing 100081 (CN); CAI, Wei, Beijing 100081 (CN)
(74) Representative: Forresters IP LLP
(86) International application number: PCT/CN2021/106074
(87) International publication number: WO 2022/048313

(56) References cited:
- EP-A1- 0 059 289
- CN-A- 101 487 072
- CN-A- 110 172 542
- CN-A- 112 212 700
- CN-U- 201 801 544
- CN-U- 87 203 177
- CN-Y- 2 461 934
- JP-A- 2006 283 065
- TW-U- M 608 963
- US-A- 4 178 173

## Description

### TECHNICAL FIELD

The application pertains to the field of metallurgical technology, and in particular, to an annular-gap-type gas supply element, and gas supply method.

### BACKGROUND ART

In metallurgical production, according to the needs of production process, a metallurgical furnace needs to be injected various gases (nitrogen, argon, air, etc.) from the bottom and/or a side wall to the metallic bath to optimize the dynamic conditions of the metallurgical furnace metallic bath to achieve the effects of homogeneity composition, promoting reaction, improving efficiency and others, among which the efficient injection of gas is particularly important.

Slag splashing technology can form a slag splashing layer on the surface of the metallurgical furnace lining by slag splashing, thus protecting furnace lining and prolonging furnace life. With the development of smelting technology, the demand for efficient smelting in metallurgy keeps increasing. Especially, the high intensity gas injection under the condition of thin slag layer or slag-free layer puts forward higher requirements for the gas supply and maintenance process of gas injection components.

The prior art discloses a multifunctional annular-gap-type gas supply element for steelmaking. By adopting an annular gap gas supply method, problems of small flow adjustment range, easy plugging and easy erosion of capillary, single tube and annular gap tube gas supply methods are solved, and the gas long-life injection under the condition of slag splashing is realized. However, the above annular gap gas supply element has only one control gas path and one gas distribution chamber, which cannot realize separate differential control of inner and outer rings. Under the condition of thin slag layer or slag-free layer, the large flow of the outer ring gas is easy to promote the transition erosion of the refractory material at the contact between the bottom blowing gas supply element and the bottom blowing protective bricks, so it cannot solve the problem of high intensity gas injection under the condition of thin slag layer, slag-free layer or complex process.

EP0059289A1 discloses a blowing tuyere for embedding in a bottom (2) or side wall of a molten metal container for blowing a gas thereinto, the tuyere including a cylindrical core body (9, 7) fixedly mounted at the centre of the tuyere and an outer tube (8) mounted concentrically around the core body (9, 7) with a gap of a predetermined width to form an annular blowing passage therebetween.

CN101487072B discloses a steel-making multifunctional circular seam type air supply unit comprising a gas ejector pipe, a mounting flange, an air separation chamber and an air inlet chamber, wherein the gas ejector pipe consists of 2 to 5 layers of pipes which are sheathed concentrically.

US4178173A discloses a process for preparing a stainless steel of low carbon content from a steel melt containing chromium or chromium nickel of higher carbon content. The process is carried out in a converter having at least one blast nozzle below the molten steel bath level and at least one blast lance above the bath level, wherein oxygen is supplied to the steel melt through the blast lance and inert gas is supplied through the blast nozzle during a first refining phase, and in a succeeding refining phase oxygen is combined with inert gas and introduced through the blast nozzles to the steel melt, the proportion of the oxygen being reduced in relationship to the proportion of inert gas with decreasing carbon content of the steel melt.

### SUMMARY OF THE INVENTION

In view of the above analysis, the present application aims to provide an annular-gap-type gas supply element and gas supply method, so as to solve the problem that high intensity gas injection cannot be achieved under thin slag layer, slag-free layer or complex process condition in the prior art.

The objects of the present application are mainly realized by the following technical schemes:
An annular-gap-type gas supply element provided by the present disclosure, in accordance with claim 1.

Further, the annular-gap-type gas supply element is suitable for converters, electric furnaces or ladles.

Further, a gas flow rate of the at least one outer annular gap is less than a gas flow rate of the at least one inner annular gap.

Further, a gas supply pressure of the at least one outer annular gap is equal to a gas supply pressure of the at least one inner annular gap, and an area of the at least one outer annular gap is smaller than an area of the at least one inner annular gap; Or, the area of the at least one outer annular gap is equal to the area of the at least one inner annular gap, and the gas supply pressure of the at least one outer annular gap is less than the gas supply pressure of the at least one inner annular gap.

Further, the gap width difference between the at least one inner annular gap and the at least one outer annular gap is less than or equal to 1 mm.

Further, the gap width of the at least one inner annular gap is 1~2 mm, and the gap width of the at least one outer annular gap is 0.5~1 mm.

Further, the gap width of the at least one inner annular gap is 1 mm, 1.1 mm, 1.3 mm, 1.5 mm, 1.7 mm, 1.9 mm or 2.0 mm, and the gap width of the at least one outer annular gap 0.5 mm, 0.7 mm, 0.8 mm or 1.0 mm.

Further, the annular-gap-type gas supply element also includes an inner gas inlet pipe connected with the inner gas space and an outer gas inlet pipe connected with the outer gas space.

Further, conical screens are set in the inner gas inlet pipe and/or the outer gas inlet pipe.

Further, tips of the conical screens are oriented opposite to the direction of gas flow.

Further, each of the conical screens includes a filter screen, a side frame, a shaft frame and springs; the filter screen is set on the side frame to form the side of the conical screen, and the shaft frame is set along the axis of the conical screen; two ends of the side frame are a connecting end close to the tip of the conical screen and a supporting end close to the bottom of the conical screen; two ends of the shaft frame are a pulling end extending out of the inner gas inlet pipe and the outer gas inlet pipe and a supporting end close to the bottom of the conical screen; the supporting end of the side frame is connected with the supporting end of the shaft frame through the springs, and the springs are always in tension; the connecting end of the side frame is rotationally connected with the shaft frame, and the pulling end of the shaft frame extends out of the inner gas inlet pipe and the outer gas inlet pipe.

Further, the inner gas space comprises an inner gas chamber and a central overflow plate arranged in the inner gas chamber, and the central overflow plate is provided with central overflow holes; the central pipe is erected on the central overflow plate, and the inner sleeve is erected on the inner gas chamber.

Further, when there are at least two inner annular gaps, at least one inner transition sleeve is set between the inner sleeve and the central pipe; the inner gas space further includes at least one inner overflow plate between the central overflow plate and the wall of the inner gas chamber; the at least one inner overflow plate is provided with inner overflow holes, and the at least one inner transition sleeve is erected on the at least one inner overflow plate.

Further, the diameter of the inner overflow holes is larger than the hole diameter of the inner overflow plate.

Further, the inner gas space also includes inner diversion parts which are arranged at the end of the inner gas chamber near the inner annular gaps, through which the gas is guided to the inner annular gaps.

Further, guide surfaces of the inner diversion parts are spiral conical.

Further, the outer gas space includes an outer gas chamber, and the outer sleeve is erected on the outer gas chamber.

Further, when there are at least two outer annular gaps, at least one outer transition sleeve is set between the outer sleeve and the inner sleeve; the outer gas space further includes at least one outer overflow plate set in the outer gas chamber; the at least one outer overflow plate is provided with outer overflow holes, and the at least one outer transition sleeve is erected on the at least one outer overflow plate.

Further, the outer gas space also includes outer diversion parts which are arranged at the end of the outer gas chamber near the outer annular gaps, through which the gas is guided to the outer annular gaps.

Further, guide surfaces of the outer diversion parts are spiral conical.

Further, the number of the outer annular gap(s) is 1 or 2, and the number of the inner annular gap(s) is 1 or 2.

The present disclosure further provides a gas supply method of the annular-gap-type gas supply element, in accordance with claim 7.

The types of the inner gas and the outer gas are the same or different.

Further, an outer gas flow rate of the at least one outer annular gap is less than an inner gas flow rate of the at least one inner annular gap.

Further, an outer gas supply pressure of the at least one outer annular gap is equal to an inner gas supply pressure of the at least one inner annular gap, and an area of the at least one outer annular gap is smaller than an area of the at least one inner annular gap; Or, the area of the at least one outer annular gap is equal to the area of the at least one inner annular gap, and the outer gas supply pressure of the at least one outer annular gap is less than the inner gas supply pressure of the at least one inner annular gap.

Further, the at least one outer annular gap does not supply gas, but only the at least one inner annular gap supplies gas when furnace lining is eroded and the erosion cannot be avoided by reducing outer gas supply flow of the at least one outer annular gap.

Further, an inner annular gap gas supply channel does not supply gas, but only the at least one outer annular gap supplies gas when the gas supply flow required for smelting is less than 50 m³/h or the gas supply pressure is less than 0.1 MPa.

Further, when adding molten iron to the metallurgical furnace under the condition that the furnace lining is completely exposed, the inner gas supply pressure of the at least one inner annular gap is the same as the outer gas supply pressure of the at least one outer annular gap, which is conducive to preventing the blocking of molten iron; in the process of molten steel smelting, the inner gas flow rate of the at least one inner annular gap is controlled to be less than the outer gas flow rate of the at least one outer annular gap.

Further, the inner gas supply pressure of the above at least one inner annular gap is 0.1~3.0MPa; and the outer gas supply pressure of the above at least one outer annular gap is 0.1~3.0MPa.

The inner gas supply pressure of the above at least one inner annular gap is 0.1 MPa, 0.5 MPa, 0.9 MPa, 1.2 MPa, 1.7 MPa, 1.9 MPa, 2.3 MPa, 2.5 MPa, 2.9 MPa or 3.0 MPa; the outer gas supply pressure of the above at least one outer annular gap is 0.1 MPa, 0.5 MPa, 0.9 MPa, 1.2 MPa, 1.7 MPa, 1.9 MPa, 2.3 MPa, 2.5 MPa, 2.9 MPa or 3.0 MPa.

Further, the pressure difference between the inner gas supply pressure of the at least one inner annular gap and the outer gas supply pressure of the at least one outer annular gap is ≤ 1.0MPa.

Further, the inner gas flow rate of the above at least one inner annular gap is 20~300Nm³ / h, and the outer gas flow rate of the above at least one outer annular gap is 20~300Nm³ / h.

Further, the inner gas flow rate of the above at least one inner annular gap is 20 Nm³ / h, 55 Nm³ / h, 84 Nm³ / h, 120 Nm³ / h, 170 Nm³ / h, 245 Nm³ / h, 265 Nm³ / h or 300 Nm³ / h; and the outer gas flow rate of the above at least one outer annular gap is 20 Nm³ / h, 55 Nm³ / h, 84 Nm³ / h, 120 Nm³ / h, 170 Nm³ / h, 245 Nm³ / h, 265 Nm³ / h or 300 Nm³ / h.

Further, the flow difference between the inner gas flow rate of the at least one inner annular gap and the outer gas flow rate of the at least one outer annular gap is ≤ 200Nm³ / h.

Compared with the prior art, the present disclosure can achieve at least one of the following beneficial effects:
a) The annular-gap-type gas supply element provided in the present disclosure is applicable to the gas injection technics of various metallurgical furnaces; by setting different gas spaces and placing the inner gas space in the outer gas space, and using the inner gas space to supply gas to the inner annular gaps, and using the outer gas space to supply gas to the outer annular gaps, during metal smelting process, the inner annular gaps and the outer annular gaps can inject gas into the metallic bath of the metallurgical furnace separately or simultaneously, so that differential control of the inner annular gaps and the outer annular gaps can be realized, and then high intensity gas injection can be realized under the condition of thin slag layer, slag-free layer or the complex process.
b) In the prior art, a single gas space is used to control multiple annular gaps at the same time, and the gas flow rate of each annular gap is automatically distributed, which cannot be controlled separately. The annular-gap-type gas supply element provided in the present disclosure, the inner annular gaps and the outer annular gaps are separately controlled by two gas spaces, which can realize independent control of the gas flow rate injected by the inner annular gaps and the outer annular gaps and has a large adjustment range, so as to be more conducive to the high intensity injection of gas.
c) The annular-gap-type gas supply element provided in the present disclosure, the gas flow rate of the outer annular gaps is less than that of the inner annular gaps, which can properly increase the gas flow rate of the inner annular gaps on the basis of ensuring that the gas flow rate of the outer annular gaps will not be too large, so as to achieve high intensity injection.

Other features and advantages of the present application will be described in the following description, and some of them will become apparent from the description, or will be understood by implementing the present application. The purpose and other advantages of the present application can be realized and obtained through the structure specially pointed out in the written description and the drawings.

### BRIEF DESCRIPTION OF DRAWINGS

The drawings are only for the purpose of showing specific embodiments, and are not considered to limit the application. In the whole drawing, the same reference symbols represent the same components.
FIG. 1 is the structural diagram of the annular-gap-type gas supply element provided in Embodiment 1 of the disclosure, wherein the number of inner annular gap is 1, and the number of the outer annular gap is 1.
FIG. 2 is another structural diagram of the annular-gap-type gas supply element provided in Embodiment 1 of the disclosure, wherein the number of the inner annular gaps is 2 and the number of outer annular gap is 1.

Reference numerals are as follows:
1-central pipe; 2-inner sleeve; 3-outer sleeve; 4-inner annular gap; 5-outer annular gap; 6-inner gas inlet pipe; 7-outer gas inlet pipe; 8-conical screen; 9-inner gas chamber; 10-outer gas chamber; 11-central overflow plate; 12-inner transition sleeve; 13-inner overflow plate; 14-inner diversion part; 15-outer diversion part.

### DETAILED DESCRIPTION OF THE INVENTION

The preferred embodiments of the present disclosure will now be described in detail with reference to the accompanying drawings, which form a part hereof, and which together with the embodiments of the present disclosure serve to explain the principles of the present disclosure.

In the description of the embodiments of the present disclosure, it should be noted that unless otherwise specified and limited, the term "connection" should be understood in a broad sense. For example, it can be a fixed connection, a removable connection, or an integrated connection; it can be a mechanical connection, or an electrical connection; it can be a direct connection, or it can be connected indirectly through an intermediate medium. For those skilled in the art, the specific meaning of the above terms in the present disclosure can be understood according to the specific situation.

The terms "top", "bottom", "on top of", "below" and "above" used in the specification describe the relative positions of components of the device, such as the relative positions of the top and bottom substrates inside the device. It can be understood that the devices are multifunctional, independent of their orientation in space.

The normal working surface of the present disclosure can be flat or curved, inclined or horizontal. For the convenience of explanation, in the embodiments of the present disclosure, the working surface is placed on the horizontal plane and used on the horizontal plane, and "high and low" and "up and down" are defined according to the working surface.

### Embodiment 1

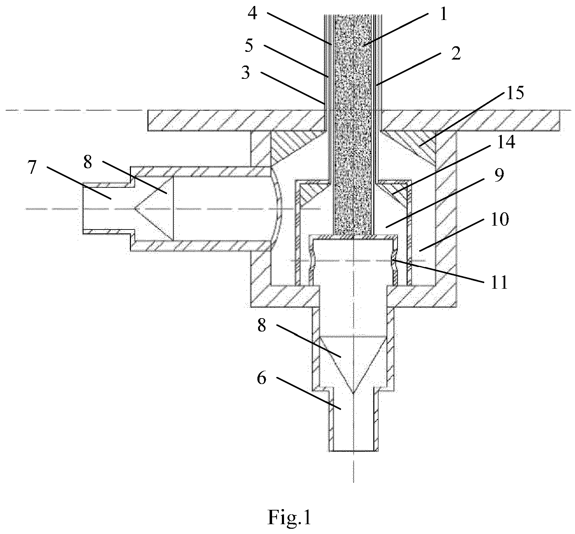

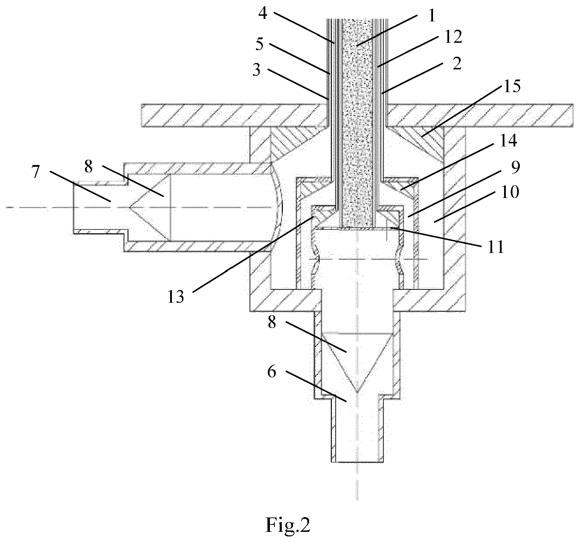

The present disclosure provides an annular-gap-type gas supply element, see Figs. 1 to 2, including a central pipe 1, an inner sleeve 2 set on the outer peripheral surface of the central pipe 1, an outer sleeve 3 set on the outer peripheral surface of the inner sleeve 2, an outer gas space and an inner gas space located in the outer gas space. At least one inner annular gap 4 is formed between the central pipe 1 and the inner sleeve 2, and at least one outer annular gap 5 is formed between the inner sleeve 2 and the outer sleeve 3, wherein the inner annular gaps 4 are connected with the inner gas space, and the outer annular gaps 5 are connected with the outer gas space.

During implementation, the inner gas space and the inner annular gaps 4 form an inner annular gap gas supply channel, and the outer gas space and the outer annular gaps 5 form an outer annular gap gas supply channel. Gas is injected into a metallic bath of a metallurgical furnace through the inner annular gap gas supply channel and the outer annular gap gas supply channel.

Compared with the prior art, the annular-gap-type gas supply element provided in the present disclosure is applicable to the gas injection technics of various metallurgical furnaces (such as converters, electric furnaces, ladles and other metallurgical vessels). By setting different gas spaces (the inner gas space and the outer gas space) and placing the inner gas space in the outer gas space, and using the inner gas space to supply gas to the inner annular gaps 4, and using the outer gas space to supply gas to the outer annular gaps 5, during metal smelting process, the inner annular gaps 4 and the outer annular gaps 5 can inject gas into the metallic bath of the metallurgical furnace separately or simultaneously, differential control of the inner annular gaps 4 and the outer annular gaps 5 can be realized (for example, same flow rate with different pressure, same pressure with different flow rate, or different pressure and flow rate), and then high intensity gas injection can be realized under the condition of thin slag layer, slag-free layer or the complex process.

At the same time, it should be noted that in the prior art, a single gas space is used to control multiple annular gaps at the same time, and the gas flow rate of each annular gap is automatically distributed, which cannot be controlled separately. In the annular-gap-type gas supply element provided in the present disclosure, the inner annular gaps 4 and the outer annular gaps 5 are separately controlled by two gas spaces, which can realize independent control of the gas flow rate injected by the inner annular gaps 4 and the outer annular gaps 5 and has a large adjustment range, so as to be more conducive to the high intensity injection of gas.

From the point of view of protecting furnace lining, the gas flow rate of the outer annular gaps 5 is less than that of the inner annular gaps 4. This is because, in practical application, if the gas flow rate of the outer annular gaps 5 is too large, it is easy to promote the transition erosion of the refractory at the contact between a bottom blowing gas supply element and bottom blowing protective bricks. The gas flow rate of the outer annular gaps 5 is less than that of the inner annular gaps 4, which can properly increase the gas flow rate of the inner annular gaps 4 on the basis of ensuring that the gas flow rate of the outer annular gaps 5 will not be too large, so as to achieve high intensity injection.

There are two ways to realize that the gas flow rate of the outer annular gaps 5 is less than that of the inner annular gaps 4. Specifically, the gas supply pressure of the outer annular gaps 5 is equal to the gas supply pressure of the inner annular gaps 4, and the areas of the outer annular gaps 5 are smaller than the areas of the inner annular gaps 4; Or, the areas of the outer annular gaps 5 are equal to the areas of the inner annular gaps 4, and the gas supply pressure of the outer annular gaps 5 is less than the gas supply pressure of the inner annular gaps 4.

Considering that if the gap width difference between the inner annular gaps 4 and the outer annular gaps 5 is too large, it will lead to a large difference in the effect of gas injection. Thus, the gap width difference between the inner annular gaps 4 and the outer annular gaps 5 is less than or equal to 1 mm.

Specifically, for the gap width of the inner annular gaps 4 and the outer annular gaps 5, for example, the gap width of the inner annular gaps 4 is 1~2 mm (for example, 1 mm, 1.1 mm, 1.3 mm, 1.5 mm, 1.7 mm, 1.9 mm or 2.0 mm), and the gap width of the outer annular gaps 5 is 0.5~1 mm (for example, 0.5 mm, 0.7 mm, 0.8 mm or 1.0 mm). This is because if the gap width of the inner annular gaps 4 and the outer annular gaps 5 is too large, this will result in small gas supply pressure at the same flow rate, which is not conducive to gas injection control, and is easy to cause safety problems and the risk of steel leakage; if the gap width of the inner annular gaps 4 and the outer annular gaps 5 is too large, this is not conducive to the high intensity gas injection, and is easy to cause the blockage of the inner annular gaps 4 and the outer annular gaps 5.

It can be understood that in order to realize the gas supply of the inner gas space and the outer gas space, the above annular-gap-type gas supply element also includes an inner gas inlet pipe 6 connected with the inner gas space and an outer gas inlet pipe 7 connected with the outer gas space.

Considering that impurities may exist in the gas, in order to avoid the impact of impurities on metal smelting, conical screens 8 are set in the above-mentioned inner gas inlet pipe 6 and/or outer gas inlet pipe 7. The gas flows through the conical screens 8. The conical screens 8 can filter the impurities in the gas and play the role of purifying the gas, thus reducing the adverse impact of impurities in the gas on metal smelting.

In order to prevent impurities from blocking filter holes at the tips of the conical screens 8, the tips of the conical screens 8 are oriented opposite to the direction of gas flow, that is, the tips of the conical screens 8 face the inlet ends of the inner gas inlet pipe 6 and the outer gas inlet pipe 7. In this way, after the impurities pass through the conical screens 8, the impurities can move towards the bottoms of the conical screens 8 under the action of the gas flow, so as to prevent the impurities from blocking the filter holes at the tips of the conical screens 8.

In order to ensure the filtering performance of the conical screens 8 and facilitate the replacement of the conical screens 8, each of the conical screens 8 includes a filter screen, a side frame, a shaft frame and springs. The filter screen is set on the side frame to form the side of the conical screen 8, and the shaft frame is set along the axis of the conical screen 8. Two ends of the side frame are a connecting end close to the tip of the conical screen 8 and a supporting end close to the bottom of the conical screen 8; two ends of the shaft frame are a pulling end extending out of the inner gas inlet pipe 6 and the outer gas inlet pipe 7 and a supporting end close to the bottom of the conical screen 8. The supporting end of the side frame is connected with the supporting end of the shaft frame through the springs, and the springs are always in tension. The connecting end of the side frame is rotationally connected with the shaft frame, and the pulling end of the shaft frame extends out of the inner gas inlet pipe 6 and the outer gas inlet pipe 7. When the conical screen 8 is seriously blocked and needs to be replaced, pull the pulling end of the shaft frame to make the conical screen 8 move towards the inlet end of the inner gas inlet pipe 6 and the inlet end of the outer gas inlet pipe 7 as a whole, so as to move the support end of the side frame towards or away from the shaft frame. The springs can reduce the diameter of the bottom end of the conical screens 8 by adjusting the tension state, so that the conical screens 8 can be taken out of the inner gas inlet pipe 6 and the outer gas inlet pipe 7 as a whole. In addition, the setting of the springs can ensure that the bottom ends of the filter screens are always in contact with the inner wall of the inner gas inlet pipe 6 and the outer wall of the outer gas inlet pipe 7 to avoid dust leakage and pollution of the inner gas inlet pipe 6 and the outer gas inlet pipe 7.

For the structure of the inner gas space, specifically, it includes an inner gas chamber 9 and a central overflow plate 11 arranged in the inner gas chamber 9. The central overflow plate 11 is provided with central overflow holes. The central pipe 1 is erected on the central overflow plate 11, and the inner sleeve 2 is erected on the inner gas chamber 9. In this way, the stable installation of the central pipe 1 and the inner sleeve 2 can be realized through the setting of the inner gas chamber 9 and the central overflow plate 11. At the same time, the gas flows through the central overflow holes and is injected into the metallic bath of the metallurgical furnace from the inner annular gaps 4.

It should be noted that when there are at least two inner annular gaps 4, at least one inner transition sleeve 12 is set between the inner sleeve 2 and the central pipe 1. In order to achieve the stable installation of the inner transition sleeve 12, the above inner gas space also includes at least one inner overflow plate 13 between the central overflow plate 11 and the wall of the inner gas chamber 9. The inner overflow plate 13 is provided with inner overflow holes, and the inner transition sleeve 12 is erected on the inner overflow plate 13.

For gas flow, for example, the number of the inner annular gaps 4 is two, namely a first inner annular gap between the central cylinder and the inner transition sleeve 12 and a second inner annular gap between the inner transition sleeve 12 and the inner sleeve 2. The gas flows into the inner gas chamber 9. Part of the gas flows through the central overflow holes and is injected into the metallic bath of the metallurgical furnace from the first inner annular gap, and the other part flows through the inner overflow holes and is injected into the metallic bath of the metallurgical furnace from the second inner annular gap.

In order to improve the uniformity of the gas injected by multiple inner annular gaps 4, the diameter of the inner overflow holes is larger than the hole diameter of the inner overflow plate 13. This is because, comparing fluid resistance of the gas supply channel, the inner gas chamber 9, the center overflow holes and the first inner annular gap form a first inner annular gap gas supply channel, and the inner gas chamber 9, the inner overflow holes and the second inner annular gap form a second inner annular gap gas supply channel. Obviously, the fluid resistance of the first inner annular gap gas supply channel is smaller than that of the second inner annular gap gas supply channel. With the hole diameter of the inner overflow holes larger than that of the inner overflow plate 13, it can properly reduce the fluid resistance of the second inner annular gap gas supply channel, so as to improve the gas uniformity of multiple inner annular gaps 4.

In order to guide the gas to the inner annular gaps 4 smoothly, the inner gas space also includes inner diversion parts 14 which are arranged at the end of the inner gas chamber 9 near the inner annular gaps 4. The inner diversion parts 14 can guide the gas to the inner annular gaps 4.

For the structure of the inner diversion parts 14, specifically, the guide surfaces of the inner diversion parts 14 are spiral conical, and the so-called guide surfaces refer to the surfaces where the inner diversion parts 14 contact with the gas. The gas can be converged through the spiral conical guide surfaces, so that the gas gradually converges to the inner annular gaps 4 and enters the inner annular gaps 4. At the same time, the spiral conical guide surfaces are used to make the gas form a rotating airflow during the flow process. The rotating airflow flows in the inner annular gaps 4, which can reduce the fluid resistance, thus increasing the ventilation effect of the inner annular gaps 4 and avoiding the blockage of the inner annular gaps 4.

Similarly, for the structure of the outer gas space, specifically, it includes an outer gas chamber 10, and the outer sleeve 3 is erected on the outer gas chamber 10. In this way, the stable installation of the outer sleeve 3 can be realized through the setting of the outer gas chamber 10.

It should be noted that when there are at least two outer annular gaps 5, at least one outer transition sleeve (not shown in the figure) is set between the outer sleeve 3 and the inner sleeve 2. In order to achieve the stable installation of the outer transition sleeve, the above outer gas space also includes at least one outer overflow plate (not shown in the figure) set in the outer gas chamber 10. The outer overflow plate is provided with outer overflow holes, and the outer transition sleeve is erected on the outer overflow plate.

For gas flow, for example, the number of the outer annular gaps 5 is two, namely a first outer annular gap between the outer transition sleeve and the outer sleeve 3 and a second outer annular gap between the inner sleeve 2 and the outer transition sleeve. The gas flows into the outer gas chamber 10. Part of the gas is injected into the metallic bath of the metallurgical furnace from the first outer annular gap, and the other part is injected into the metallic bath of the metallurgical furnace from the second outer annular gap through the outer overflow holes.

In order to guide the gas to the outer annular gaps 5 smoothly, the outer gas space also includes outer diversion parts 15 which are arranged at the end of the outer gas chamber 10 near the outer annular gaps 5. The outer diversion parts 15 can guide the gas to the outer annular gaps 5.

For the structure of the outer diversion parts 15, specifically, the guide surfaces of the outer diversion parts 15 are spiral conical, and the so-called guide surfaces refer to the surfaces where the outer diversion parts 15 contact with the gas. The spiral conical guide surfaces can converge the gas and make the gas gradually converge to the outer annular gaps 5 and enter the outer annular gaps 5. At the same time, the spiral conical guide surfaces are used to make the gas form a rotating airflow during the flow process. The rotating airflow flows in the outer annular gaps 5, which can reduce the fluid resistance, thus increasing the ventilation effect of the outer annular gaps 5 and avoiding the blockage of the outer annular gaps 5.

For the number of outer annular gaps 5 and inner annular gaps 4, for example, the number of the outer annular gap(s) 5 is 1 or 2, and the number of the inner annular gap(s) 4 is 1 or 2. This is because the gap width of the inner annular gaps 4 and the outer annular gaps 5 are related to the flow and injection safety. Under the condition that the gap width of the inner annular gaps 4 and the outer annular gaps and the gas supply pressure are fixed, the number of the inner annular gap(s) 4 and the outer annular gap(s) 5 is 1 to 2, which can not only effectively simplify the internal structure of the above-mentioned annular-gap-type gas supply element, but also improve the injection gas flow rate and flow rate adjustment range.

### Embodiment 2

This embodiment provides a gas supply method of the annular-gap-type gas supply element, including the following steps:
Inner gas is injected into a metallic bath of a metallurgical furnace through the inner gas space and the inner annular gaps successively;
And/or, outer gas is injected into the metallic bath of the metallurgical furnace through the outer gas space and the outer annular gaps successively;
The types of the inner gas and the outer gas are the same or different.

Compared with the prior art, the beneficial effects of the gas supply method of the annular-gap-type gas supply element provided in this embodiment is basically the same as that of the annular-gap-type gas supply element provided in Embodiment 1, which will not be described in detail here.

From the point of view of protecting furnace lining, in the above gas supply method, the outer gas flow rate of the outer annular gaps is less than the inner gas flow rate of the inner annular gaps. This is because, in practical application, if the outer gas flow rate of the outer annular gaps is too large, it is easy to promote the transition erosion of the refractory at the contact between a bottom blowing gas supply element and bottom blowing protective bricks. The outer gas flow rate of the outer annular gaps is less than the inner gas flow rate of the inner annular gaps, which can properly increase the internal gas flow rate of the inner annular gaps on the basis of ensuring that the outer gas flow rate of the outer annular gaps will not be too large, so as to achieve high intensity injection.

There are two ways to realize that the outer gas flow rate of the outer annular gaps is less than the inner gas flow rate of the inner annular gaps. Specifically, the outer gas supply pressure of the outer annular gaps is equal to the inner gas supply pressure of the inner annular gaps, and the areas of the outer annular gaps are smaller than the areas of the inner annular gaps; Or, the areas of the outer annular gaps are equal to the areas of the inner annular gap, and the inner gas supply pressure of the outer annular gaps is less than the inner gas supply pressure of the inner annular gaps.

It should be noted that when the furnace lining is eroded and the erosion cannot be avoided by reducing the outer gas supply flow rate of the outer annular gaps, the outer annular gaps do not supply gas, but only the inner annular gaps supply gas.

When the gas supply flow rate required for smelting is less than 50 m3/h or the gas supply pressure is less than 0.1 MPa, the simultaneous gas supply of the inner and outer annular gaps will cause the inner gas supply pressure and the outer gas supply pressure to be too small, and the molten steel will flow back into the inner and outer annular gaps, causing plugging of the inner and outer annular gaps. Therefore, the inner annular gap gas supply channel will not supply gas, but only the outer annular gaps supply gas. In addition, adopting the mode of no gas supply in the inner annular gap gas supply channel and only the outer annular gaps supplying gas is equivalent to expanding the area of no gas supply in the center of the above gas supply unit, which is equivalent to increasing the area of the central cylinder, and can also avoid water sag. It should be noted that the water sag phenomenon refers to the erosion of the gas outlet ends of the inner annular gaps and the gas outlet ends of the outer annular gaps caused by the rising of bubbles and the falling of liquid with the same volume as bubbles in the process of bottom blowing gas supply.

For example, when adding molten iron to the metallurgical furnace under the condition that the furnace lining is completely exposed, the inner gas supply pressure of the inner annular gaps is controlled to be the same as the outer gas supply pressure of the outer annular gaps, for example, greater than 0.3 MPa, which is conducive to preventing the blocking of molten iron. In the process of molten steel smelting, the inner gas flow rate of the inner annular gaps is controlled to be less than the outer gas flow rate of the outer annular gaps, which is beneficial to reduce the erosion of the refractory material contacting with the bottom blown protective bricks.

As an example, the inner gas supply pressure of the above inner annular gaps is 0.1~3.0MPa (e.g. 0.1 MPa, 0.5 MPa, 0.9 MPa, 1.2 MPa, 1.7 MPa, 1.9 MPa, 2.3 MPa, 2.5 MPa, 2.9 MPa or 3.0 MPa), and the outer gas supply pressure of the above outer annular gaps is 0.1~3.0MPa (e.g. 0.1 MPa, 0.5 MPa, 0.9 MPa, 1.2 MPa, 1.7 MPa, 1.9 MPa, 2.3 MPa, 2.5 MPa, 2.9 MPa or 3.0 MPa), and the pressure difference between the inner gas supply pressure of the inner annular gaps and the outer gas supply pressure of the outer annular gaps is ≤ 1.0MPa. The inner gas flow rate of the above inner annular gaps is 20~300Nm³ / h (e.g. 20 Nm³ / h, 55 Nm³ / h, 84 Nm³ / h, 120 Nm³ / h, 170 Nm³ / h, 245 Nm³ / h, 265 Nm³ / h or 300 Nm³ / h) , and the outer gas flow rate of the above outer annular gaps is 20~300Nm³ / h (e.g. 20 Nm³ / h, 55 Nm³ / h, 84 Nm³ / h, 120 Nm³ / h, 170 Nm³ / h, 245 Nm³ / h, 265 Nm³ / h or 300 Nm³ / h), and the flow rate difference between the inner gas flow rate of the inner annular gaps and the outer gas flow rate of the outer annular gaps is ≤ 200Nm³ / h_{∘}

The above is only preferred embodiments of the present application, but the scope of the present application is not limited thereto, and any modification or substitution that can be easily conceived by those skilled in the art within the scope of the present claims.

## Claims

1. An annular-gap-type gas supply element, **characterized in that** it comprises a central pipe (1), an inner sleeve (2), an outer sleeve (3), an outer gas space and an inner gas space located in the outer gas space, wherein the inner sleeve (2) is set on an outer peripheral surface of the central pipe (1), and the outer sleeve (3) is set on an outer peripheral surface of the inner sleeve (2);
at least one inner annular gap (4) is formed between the central pipe (1) and the inner sleeve (2), and at least one outer annular gap (5) is formed between the inner sleeve (2) and the outer sleeve (3), wherein the at least one inner annular gap (4) is connected with the inner gas space, and the at least one outer annular gap (5) is connected with the outer gas space;
wherein the inner gas space comprises an inner gas chamber (9) and a central overflow plate (11) arranged in the inner gas chamber (9), and the central overflow plate (11) is provided with central overflow holes; the central pipe (1) is erected on the central overflow plate (11), and the inner sleeve (2) is erected on the inner gas chamber (9); and
the outer gas space comprises an outer gas chamber (10), and the outer sleeve (3) is erected on the outer gas chamber (10);
wherein the inner gas space further comprises inner diversion parts (14) which are arranged at an end of the inner gas chamber (9) near the inner annular gap(s) (4), through which an inner gas is guided to the inner annular gap(s) (4);
wherein guide surfaces of the inner diversion parts (14) are spiral conical, wherein the guide surfaces of the inner diversion parts (14) refer to the surfaces where the inner diversion parts (14) contact with the inner gas; and
wherein the outer gas space further comprises outer diversion parts (15) which are arranged at an end of the outer gas chamber (10) near the outer annular gap(s) (5), through which an outer gas is guided to the outer annular gap(s) (5).

2. The annular-gap-type gas supply element according to claim 1, wherein it further comprises an inner gas inlet pipe (6) connected with the inner gas space and an outer gas inlet pipe (7) connected with the outer gas space.

3. The annular-gap-type gas supply element according to claim 2, wherein conical screens (8) are set in the inner gas inlet pipe (6) and/or the outer gas inlet pipe (7).

4. The annular-gap-type gas supply element according to claim 3, wherein tips of the conical screens (8) are oriented opposite to the direction of gas flow.

5. The annular-gap-type gas supply element according to claim 1, wherein at least one inner transition sleeve (12) is set between the inner sleeve (2) and the central pipe (1);
the inner gas space further includes at least one inner overflow plate (13) between the central overflow plate (11) and the wall of the inner gas chamber (9);
the at least one inner overflow plate (13) is provided with inner overflow holes, and the at least one inner transition sleeve (12) is erected on the at least one inner overflow plate (13).

6. The annular-gap-type gas supply element according to claim 1, wherein at least one outer transition sleeve is set between the outer sleeve (3) and the inner sleeve (2);
the outer gas space further includes at least one outer overflow plate set in the outer gas chamber (10); the at least one outer overflow plate is provided with outer overflow holes, and the at least one outer transition sleeve is erected on the at least one outer overflow plate.

7. A gas supply method of the annular-gap-type gas supply element according to any one of claims 1-6, **characterized in that** it comprises the following steps:
inner gas is injected into metallic bath of a metallurgical furnace through an inner gas space and at least one inner annular gap (4) successively;
and/or, outer gas is injected into the metallic bath of the metallurgical furnace through an outer gas space and at least one outer annular gap (5) successively.

8. The gas supply method of the annular-gap-type gas supply element according to claim 7, wherein the types of the inner gas and the outer gas are the same.

9. The gas supply method of the annular-gap-type gas supply element according to claim 7, wherein the types of the inner gas and the outer gas are different.

10. The gas supply method of the annular-gap-type gas supply element according to any one of claims 7-9, wherein the at least one outer annular gap (5) does not supply gas, but only the at least one inner annular gap (4) supplies gas when furnace lining is eroded and the erosion cannot be avoided by reducing outer gas supply flow rate of the at least one outer annular gap (5).

11. The gas supply method of the annular-gap-type gas supply element according to any one of claims 7-9, wherein an inner annular gap gas supply channel does not supply gas, but only the at least one outer annular gap (5) supplies gas when the gas supply flow rate required for smelting is less than 50 m³/h or the gas supply pressure is less than 0.1 MPa.

12. The gas supply method of the annular-gap-type gas supply element according to any one of claims 7-9, wherein when adding molten iron to the metallurgical furnace under the condition that the furnace lining is completely exposed, the inner gas supply pressure of the at least one inner annular gap (4) is the same as the outer gas supply pressure of the at least one outer annular gap (5).

13. The gas supply method of the annular-gap-type gas supply element according to any one of claims 7-9, wherein in the process of molten steel smelting, the inner gas flow rate of the at least one inner annular gap (4) is less than the outer gas flow rate of the at least one outer annular gap (5).

## Patentansprüche

1. Eine Ringspalt-Gaszufuhrkomponente, **dadurch gekennzeichnet, dass** sie ein Zentralrohr (1), eine Innenhülse (2), eine Außenhülse (3), einen Außengasraum und einen im Außengasraum angeordneten Innengasraum umfasst, wobei die Innenhülse (2) auf der Außenumfangsfläche des Zentralrohrs (1) angebracht, die Außenhülse (3) auf der Außenumfangsfläche der Innenhülse (2) angebracht;
zwischen dem Zentralrohr (1) und der Innenhülse (2) mindestens ein Innenringspalt (4) gebildet ist und zwischen der Innenhülse (2) und der Außenhülse (3) mindestens ein Außenringspalt (5) gebildet ist, wobei der mindestens eine Innenringspalt (4) mit dem Innengasraum und der mindestens eine Außenringspalt (5) mit dem Außengasraum verbunden ist;
wobei das Innengasraum eine Innengaskammer (9) und eine in der Innengaskammer (9) angeordnete Zentralüberlaufplatte (11) umfasst, die Zentralüberlaufplatte (11) mit Zentralüberlauflöchern versehen ist, das Zentralrohr (1) auf der Zentralüberlaufplatte (11) errichtet wird und die Innenhülse (2) auf der Innengaskammer (9) errichtet wird;
und das Außengasraum eine Außengaskammer (10) umfasst, die Außenhülse (3) auf der Außengaskammer (10) errichtet ist;
wobei der Innengasraum auch Innenumleitungsteile (14) umfasst, die am Ende der Innengaskammer (9) in der Nähe der Innenringspalte (4) angeordnet sind, durch die Innenumleitungsteile (14) das Gas zu den Innenringspalte (4) geleitet werden kann;
wobei die Führungsflächen der Innenumleitungsteile (14) insbesondere spiralförmig konisch sind, und die sogenannten Führungsflächen sich auf die Flächen beziehen, an denen die Innenumleitungsteile (14) mit dem Gas in Kontakt kommen;
und der Außengasraum auch Außenumleitungsteile (15) umfasst, die am Ende der Außengaskammer (10) in der Nähe der Außenringspalt (5) angeordnet sind, durch die Außenumleitungsteile (15) das Gas zu den Außenringspalt (5) geleitet werden kann.

2. Die Ringspalt-Gaszufuhrkomponente gemäß Anspruch 1, **dadurch gekennzeichnet, dass** das auch ein Innengaseinlassrohr (6) umfasst, das mit dem Innengasraum verbunden ist, und auch ein Außengaseinlassrohr (7) umfasst, das mit dem Außengasraum verbunden ist.

3. Die Ringspalt-Gaszufuhrkomponente gemäß Anspruch 2, **dadurch gekennzeichnet, dass** die Kegelsiebe (8) in das Innengaseinlassrohr (6) und/oder das Außengaseinlassrohr (7) eingesetzt werden.

4. Die Ringspalt-Gaszufuhrkomponente gemäß Anspruch 3, **dadurch gekennzeichnet, dass** die Spitzen der Kegelsiebe (8) entgegen der Richtung des Gasflusses ausgerichtet sind.

5. Die Ringspalt-Gaszufuhrkomponente gemäß Anspruch 1, **dadurch gekennzeichnet, dass** zwischen der Innenhülse (2) und dem Zentralrohr (1) mindestens eine Innenübergangshülse (12) eingesetzt wird;
der Innengasraum mindestens eine Innenüberlaufplatte (13) umfasst, die zwischen der Zentralüberlaufplatte (11) und der Wandung der Innengaskammer (9) aufweist;
die Innenüberlaufplatte (13) mit Innenüberlauflöchern versehen ist und mindestens eine Innenübergangshülse (12) ist auf mindestens einer Innenüberlaufplatte (13) errichtet.

6. Die Ringspalt-Gaszufuhrkomponente gemäß Anspruch 1, **dadurch gekennzeichnet, dass** zwischen der Außenhülse (3) und der Innenhülse (2) mindestens eine Außenübergangshülse eingesetzt wird;
der Außengasraum zusätzlich mindestens eine Außenüberlaufplatte umfasst, die in der Außengaskammer (10) angeordnet ist, die Außenüberlaufplatte mit Außenüberlauflöchern versehen ist und die Außenübergangshülse auf der Außenüberlaufplatte errichtet ist.

7. Ein Gaszufuhrverfahren für die Ringspalt-Gaszufuhrkomponente, **dadurch gekennzeichnet, dass** die Ringspalt-Gaszufuhrkomponente gemäß einem der Ansprüche 1 bis 6 angenommen wird, und das Gaszufuhrverfahren die folgenden Schritte umfasst:
das Innengas wird nacheinander durch einen Innengasraum und mindestens einen Innenringspalt (4) in das Metallbad eines metallurgischen Ofens eingespritzt;
und/oder das Außengas wird nacheinander durch einen Außengasraum und mindestens einen Außenringspalt (5) in das Metallbad des metallurgischen Ofens eingespritzt.

8. Das Gaszufuhrverfahren für die Ringspalt-Gaszufuhrkomponente gemäß Anspruch 7, **dadurch gekennzeichnet, dass** die Arten des Innengases und des Außengases gleich sind.

9. Das Gaszufuhrverfahren für die Ringspalt-Gaszufuhrkomponente gemäß Anspruch 7, **dadurch gekennzeichnet, dass** die Arten des Innengases und des Außengases unterschiedlich sind.

10. Das Gaszufuhrverfahren für die Ringspalt-Gaszufuhrkomponente gemäß einem der Ansprüche 7 bis 9, **dadurch gekennzeichnet, dass** mindestens eine Außenringspalt (5) kein Gas zuführt, sondern nur der mindestens eine Innenringspalt (4) Gas zuführt, wenn die Ofenauskleidung erodiert ist und die Erosion nicht durch eine Reduzierung des äußeren Gaszufuhrstroms des mindestens einen Außenringspalts (5) vermieden werden kann.

11. Das Gaszufuhrverfahren für die Ringspalt-Gaszufuhrkomponente gemäß einem der Ansprüche 7 bis 9, **dadurch gekennzeichnet, dass** das Innenringspalt-Gaszufuhrkanal kein Gas zuführt, sondern nur mindestens eine Außenringspalt (5) Gas zuführt, wenn der zum Schmelzen erforderliche Gaszufuhrstrom weniger als 50 m³/h beträgt oder der Gaszufuhrdruck weniger als 0,1 MPa beträgt.

12. Das Gaszufuhrverfahren für die Ringspalt-Gaszufuhrkomponente gemäß einem der Ansprüche 7 bis 9, **dadurch gekennzeichnet, dass** der innere Gaszufuhrdruck des mindestens einen Innenringspalts (4) der gleiche wie der äußere Gaszufuhrdruck des mindestens einen Außenringspalts (5) ist, wenn geschmolzenes Eisen in den metallurgischen Ofen gegeben wird und die Ofenauskleidung vollständig freiliegt.

13. Das Gaszufuhrverfahren für die Ringspalt-Gaszufuhrkomponente gemäß einem der Ansprüche 7 bis 9, **dadurch gekennzeichnet, dass** beim Schmelzen von geschmolzenem Stahl, die innere Gasströmungsrate des mindestens einen Innenringspalts (4) niedriger als die äußere Gasströmungsrate des mindestens einen Außenringspalts (5) ist.

## Revendications

1. Élément d'alimentation en gaz de type à espace annulaire, **caractérisé en ce qu'**il comprend un tube central (1), un manchon intérieur (2), un manchon extérieur (3), une chambre à gaz extérieure et une chambre à gaz intérieure située dans la chambre à gaz extérieure, dans lequel ledit manchon intérieur (2) étant disposée sur une surface périphérique extérieure dudit tube central (1) et ledit manchon extérieur (3) étant disposée sur une surface périphérique extérieure de ledit manchon intérieure(2);
au moins un espace annulaire intérieur (4) est formé entre ledit tube central (1) et ledit manchon intérieur (2), et au moins un espace annulaire extérieur (5) est formé entre ledit manchon intérieur (2) et ledit manchon extérieur (3), dans lequel ledit au moins un espace annulaire intérieur (4) est relié à la chambre à gaz intérieure, et ledit au moins un espace annulaire extérieur (5) est relié à la chambre à gaz extérieure;
dans lequel ladite chambre à gaz intérieure comprend une cavité à gaz intérieure (9) et une plaque de débordement centrale (11) disposée à l'intérieur de la cavité à gaz intérieure (9), avec des trous de débordement central prévus dans ladite plaque de débordement centrale (11); ledit tube central (1) est monté sur la plaque de débordement centrale (11), et ledit manchon intérieur (2) est monté sur la cavité à gaz intérieure (9); et
ladite chambre à gaz extérieure comprend une cavité à gaz extérieure (10), ledit manchon extérieur (3) est monté sur la cavité à gaz extérieure (10);
dans lequel ladite chambre à gaz intérieure comprend en outre une partie de guidage d'écoulement intérieure (14) disposée à une extrémité de la cavité à gaz intérieure (9) à proximité de l'espace annulaire intérieur (4), le gaz intérieur est guidé vers l'espace annulaire intérieur (4) à travers ladite partie de guidage d'écoulement intérieure (14);
dans lequel ladite partie de guidage d'écoulement intérieure (14) a une surface de guidage d'écoulement de forme conique en spirale, ladite surface de guidage d'écoulement de ladite partie de guidage d'écoulement intérieure (14) fait référence à la surface de la partie de guidage d'écoulement intérieure (14) qui est en contact avec le gaz intérieur; et
ladite chambre à gaz extérieure comprend en outre une partie de guidage d'écoulement extérieure (15) disposée à une extrémité de la cavité à gaz extérieure (10) à proximité de l'espace annulaire extérieur (5), le gaz extérieur est guidé vers l'espace annulaire extérieur (5) à travers ladite partie de guidage d'écoulement extérieure (15).

2. Élément d'alimentation en gaz de type à espace annulaire selon la revendication 1, **caractérisé en ce qu'**il comprend en outre un tube d'entrée de gaz intérieur (6) en communication avec la chambre à gaz intérieure et un tube d'entrée de gaz extérieur (7) en communication avec la chambre à gaz extérieure.

3. Élément d'alimentation en gaz de type à espace annulaire selon la revendication 2, **caractérisé en ce que** des tamis coniques(8) sont prévus à l'intérieur du tube d'entrée de gaz intérieur (6) et/ou du tube d'entrée de gaz extérieur (7).

4. Élément d'alimentation en gaz de type à espace annulaire selon la revendication 3, **caractérisé en ce que** des pointes des tamis coniques(8) sont orientées dans la direction opposée au sens d'écoulement du gaz.

5. Élément d'alimentation en gaz de type à espace annulaire selon la revendication 1, **caractérisé en ce que** au moins une couche de manchon de transition intérieure (12) est prévue en outre entre ledit manchon intérieur (2) et le tube central (1);
ladite chambre à gaz intérieure comprend en outre au moins une plaque de débordement intérieure (13) disposée entre la plaque de débordement centrale (11) et la paroi de la cavité à gaz intérieure (9);
des trous de débordement intérieures sont prévus dans ladite plaque de débordement intérieure (13), ladite au moins une couche de manchon de transition intérieure (12) est montée sur ladite au moins une plaque de débordement intérieure (13).

6. Élément d'alimentation en gaz de type à espace annulaire selon la revendication 1, **caractérisé en ce que** au moins une couche de manchon de transition extérieure est prévue en outre entre ledit manchon extérieur (3) et le manchon intérieur (2);
ladite chambre à gaz extérieure comprend en outre au moins une plaque de débordement extérieure disposée dans l'intérieur de la cavité à gaz extérieure (10), des trous de débordement extérieures sont prévus dans ladite au moins une plaque de débordement extérieure, ladite au moins une couche de manchon de transition extérieure est montée sur ladite au moins une plaque de débordement extérieure.

7. Procédé d'alimentation en gaz d'un élément d'alimentation en gaz de type à espace annulaire, **caractérisé en ce que** l'élément d'alimentation en gaz de type à espace annulaire selon l'une quelconque des revendications 1 à 6 est utilisé, ledit procédé d'alimentation en gaz comprend les étapes suivantes:
le gaz intérieur est soufflé séquentiellement à travers la chambre à gaz intérieur et au moins un espace annulaire intérieur (4) dans le bain de métal en fusion du four métallurgique;
et/ou, le gaz extérieur est soufflé séquentiellement à travers la chambre à gaz extérieur et au moins un espace annulaire extérieur (5) dans le bain de métal en fusion du four métallurgique.

8. Procédé d'alimentation en gaz d'un élément d'alimentation en gaz de type à espace annulaire selon la revendication 7, **caractérisé en ce que** les types de gaz intérieur et de gaz extérieur sont les mêmes.

9. Procédé d'alimentation en gaz d'un élément d'alimentation en gaz de type à espace annulaire selon la revendication 7, **caractérisé en ce que** les types de gaz intérieur et de gaz extérieur sont différents.

10. Procédé d'alimentation en gaz d'un élément d'alimentation en gaz de type à espace annulaire selon l'une quelconque des revendications 7 à 9, **caractérisé en ce que** dans des conditions où l'érosion du revêtement du four se produit et où l'érosion ne peut être évitée en réduisant le débit d'alimentation en gaz extérieur dudit au moins un espace annulaire extérieur (5), ledit au moins un espace annulaire extérieur (5) n'est pas alimenté en gaz et seul ledit au moins un espace annulaire intérieur (4) est alimenté en gaz.

11. Procédé d'alimentation en gaz d'un élément d'alimentation en gaz de type à espace annulaire selon l'une quelconque des revendications 7 à 9, **caractérisé en ce que** lorsque le débit de gaz requis pour la fusion est inférieur à 50 m³/h ou que la pression d'alimentation en gaz est inférieure à 0.1 MPa, le passage d'alimentation en gaz du espace annulaire intérieur n'est pas alimenté en gaz et seule ledit au moins un espace annulaire extérieur (5) est alimenté en gaz.

12. Procédé d'alimentation en gaz d'un élément d'alimentation en gaz de type à espace annulaire selon l'une quelconque des revendications 7 à 9, **caractérisé en ce que** lorsque du fer fondu est ajouté au four métallurgique dans la condition que le revêtement du four soit complètement exposé, la pression d'alimentation en gaz intérieur d'au moins un espace annulaire intérieur (4) est la même que la pression d'alimentation en gaz extérieur d'au moins un espace annulaire extérieur (5).

13. Procédé d'alimentation en gaz d'un élément d'alimentation en gaz de type à espace annulaire selon l'une quelconque des revendications 7 à 9, **caractérisé en ce que** pendant du processus de fusion de l'acier, le débit de gaz intérieur d'au moins un espace annulaire intérieur (4) est inférieur au débit de gaz extérieur d'au moins un espace annulaire extérieur (5).
